# EUROPEAN PATENT APPLICATION

(11) **EP 2 520 844 A1**
(43) Date of publication of application: **07.11.2012**
(21) Application number: 12166481.7
(22) Date of filing: 02.05.2012
(51) Int. Cl.: F16L 59/147, F16L 59/22, F01N 13/14, F01N 13/10

(54) **Internally insulated rigid exhaust system and method for making same**

(30) Priority: 02.05.2011 US 201161481330 P
(71) Applicant: Tru-Flex Metal Hose, LLC, West Lebanon, IN 47791 (US)
(72) Inventor: Teso, Michael, Lafayette, IN Indiana 47901 (US); Swank, Scott R., Williamsport, IN Indiana 47993 (US); Harmon, Matthew, Columbus, IN Indiana 47203 (US); Stalcup, Robert F., Covington, IN Indiana 47932 (US); Thomas, Clark, West Lebanon, IN Indiana 47991 (US); Jordan, Lucky D., Williamsport, IN Indiana 47993 (US)
(74) Representative: Lawal, Abdulmalik Adinoyi

(57) **Abstract**

An internally insulated rigid exhaust system conduit (10) and method for making the same are provided. The conduit includes an outer rigid tube (12), a generally flexible inner portion (16) positioned within the outer tube and an insulation layer (14) positioned therebetween. The conduit (10) may include one or more bends or curves. Due to the flexibility of the inner portion (16) and insulation (14), a gap defined between the inner portion and outer tube may be generally uniform in width even after the bending of the outer tube (12). During the manufacturing process, the inner portion (16) is wrapped with a blanket or sleeve of insulation material to form a wrapped subassembly and then inserted into the outer tube (12). The insertion of the wrapped subassembly may occur either before or after a bending of the outer tube (12). The insulation (14) may also be blown into the gap defined between the inner portion (16) and outer tube (12).

## Description

### CROSS-REFERENCE TO RELATED APPLICATIONS

This Application claims priority to U.S. Provisional Patent Application Serial Number 61/481,330 filed May 2, 2011 to Michael Teso entitled "Internally Insulated Exhaust System," currently pending, the entire disclosure of which is incorporated herein by reference.

### BACKGROUND OF THE INVENTION

In the past years, government regulations, including those promulgated by the Environmental Protection Agency (EPA), have required that emission levels of motor vehicles be reduced over time. The EPA has implemented these requirements by setting regulations which requires emission reductions by any company which manufactures motor vehicles, engines or emission systems. Recently, the regulations have become even more stringent and motor vehicle, engine and emission system manufacturers have had to apply new technological components to their vehicles in order to comply with the parameters set for by the EPA.

The primary goal in reducing emissions is to eliminate as much nitrous oxide in the exhaust stream as possible. This requires that most manufacturers of motor vehicles equip their vehicles with emission systems. The process of eliminating the nitrous oxides is achieved by using "selective catalytic reduction" or SCR systems. In those systems, the nitrous oxides that travel through the exhaust stream come into contact with urea, which is sprayed into the exhaust tube through a nozzle. Upon its injection into the exhaust stream, the urea bums up a majority of the nitrous oxides in the exhaust stream, thus reducing harmful emissions into the atmosphere.

The largest factor in achieving a reduction of nitrous oxides is the temperature of the exhaust gas traveling through the exhaust system. Testing has proven that the higher the temperatures of the exhaust stream, the more nitrous oxides will be eliminated once the urea is injected into the system.

Additionally, insulating the exhaust system has been shown to increase engine performance. This is achieved by hastening the exit of combusted gasses in the exhaust system and allowing the engine to accept a greater volume of cooler intake air. The combusted gasses cool as they leave the chamber and, therefore, lose velocity. Insulating the pipes in the exhaust system keeps the gasses as high a temperature as possible and, therefore, increases the gasses' exit velocity as compared to non-insulated exhaust systems. The increased exit of the combusted gasses reduces back pressure and allows the engine to accept a greater volume of cooler intake air, which results in greater horsepower output.

Because such extreme heat is present within the exhaust system, the ambient air surrounding the exhaust pipes can reach relatively high temperatures as well. Components made of plastic and rubber that surround these exhaust systems can be damaged due to the heat. Therefore, manufacturers have taken precautions such as externally insulating rigid exhaust pipes with insulated blanket wraps to ensure external components are protected and that exhaust temperatures remain high to reach the intended emissions reduction. However, such insulated blanket wraps are consistently subjected to weather, sun and other environmental elements, especially in over-the-road trucks, and therefore can become cracked, worn or otherwise degraded.

Accordingly, a need exists for an internally insulated rigid exhaust system having insulating properties for reducing emissions and increasing engine performance. Additionally, a need exists for an insulated exhaust conduit where the insulation material is protected from the elements. Further, a need exists for a method of simply and efficiently manufacturing an internally insulated exhaust conduit.

### SUMMARY OF THE INVENTION

The present invention involves the provision of an internally insulated rigid conduit for use in an exhaust system. The conduit includes an outer rigid tube, a generally flexible inner portion positioned within the outer tube and an insulation layer disposed between the inner portion and outer tube. The inner portion may be a spirally-wound interlock hose member, a bellows member, a braided, chainmail or mesh member or any combinations thereof. The insulation layer may be formed from a sheet, blanket or sleeve or loose particles, fibers, filaments or pieces.

The conduit may include one or more curves or bends. Due to their flexibility, the inner portion and insulation layer generally conform to any bend or curve formed in the outer rigid tube. In one embodiment, one or more spacers are positioned between the inner portion and outer tube for maintaining a generally uniform annular gap therebetween. The spacers may be welded or otherwise attached to the inner portion.

The present invention also involves the provision of a method for manufacturing an internally insulated rigid conduit. In one embodiment of the method, the inner portion is wrapped with insulation to form a wrapped subassembly. The wrapped subassembly is then inserted into the outer tube. The wrapped subassembly may be placed within the outer tube either before or after the outer tube has been bent. One or more sleeving fixtures designed to engage the inner portion may be utilized to pull the wrapped subassembly into the outer tube.

In another embodiment of the method, the inner portion is placed within the outer tube such as to define an annular gap therebetween. The inner portion may be placed within the outer tube either before or after the outer tube has been bent. Insulation is then injected, blown, sprayed, stuffed or otherwise placed into the gap. One or more spacers may be used to maintain a generally uniform annular gap between the inner portion and the outer tube.

Other and further objects of the invention, together with the features of novelty appurtenant thereto, will appear in the course of the following description.

### DESCRIPTION OF THE SEVERAL VIEWS OF THE DRAWING

In the accompanying drawing, which forms a part of the specification and is to be read in conjunction therewith in which like reference numerals are used to indicate like or similar parts in the various views:
Fig. 1 is a partial cutaway sectional view of an insulated rigid exhaust system having a generally flexible internal bellows member in accordance with one embodiment of the present invention;
Fig. 2 is a partial cutaway sectional view of an insulated rigid exhaust system having a generally flexible internal spirally-wound interlock member in accordance with one embodiment of the present invention;
Fig. 3 is a partial cutaway sectional view of an insulated rigid exhaust system having a generally flexible internal bellows member, transition component and end fitting in accordance with one embodiment of the present invention;
Fig. 4 is a partial cutaway sectional view of an insulated rigid exhaust system having a generally flexible internal spirally-wound interlock member, transition member and end fitting in accordance with one embodiment of the present invention;
Fig. 5 is a partial cutaway sectional view of an insulated rigid exhaust system having a generally flexible internal bellows member and internal expansion ring in accordance with one embodiment of the present invention;
Fig. 6 is a partial cutaway sectional view of an insulated rigid exhaust system having a generally flexible internal spirally-wound interlock member and an internal expansion ring in accordance with one embodiment of the present invention;
Fig. 7 is a partial cutaway sectional view of an insulated rigid exhaust system of a bent configuration in accordance with one embodiment of the present invention;
Fig. 8 is a sectional view illustrating a wrapped subassembly being pulled into an outer tube with a sleeving fixture in accordance with one embodiment of the present invention;
Fig. 9 is a is a sectional view illustrating a wrapped subassembly being pulled into an outer tube with two sleeving fixtures in accordance with one embodiment of the present invention;
Fig. 10 is a top perspective view of a sleeving fixture used for pulling a wrapped subassembly into an outer tube in accordance with one embodiment of the present invention;
Fig. 11 is a is a side elevational view of a sleeving fixture used for pulling a wrapped subassembly into an outer tube in accordance with one embodiment of the present invention; and
Fig. 12 is a sectional view of an insulated rigid exhaust system having spacers located between an inner portion and an outer tube in accordance with one embodiment of the present invention.

### DETAILED DESCRIPTION OF THE INVENTION

The invention will now be described with reference to the drawing figures, in which like reference numerals refer to like parts throughout. For purposes of clarity in illustrating the characteristics of the present invention, proportional relationships of the elements have not necessarily been maintained in the drawing figures.

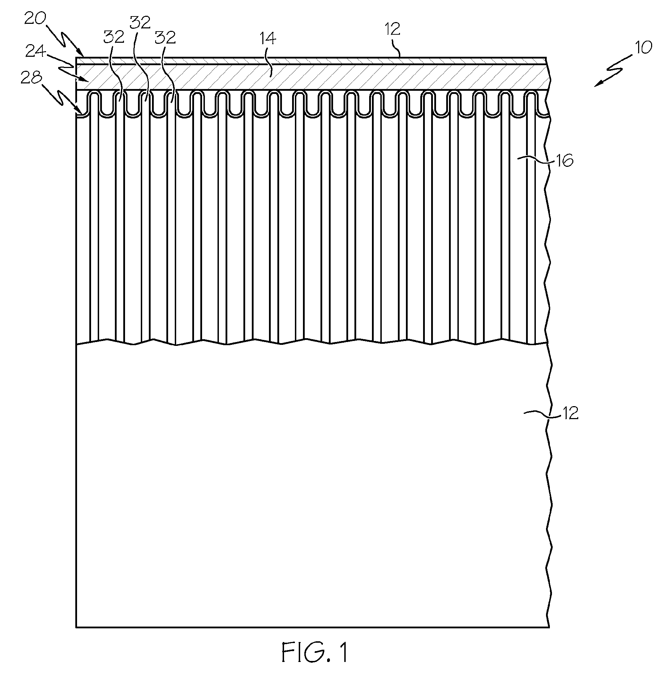

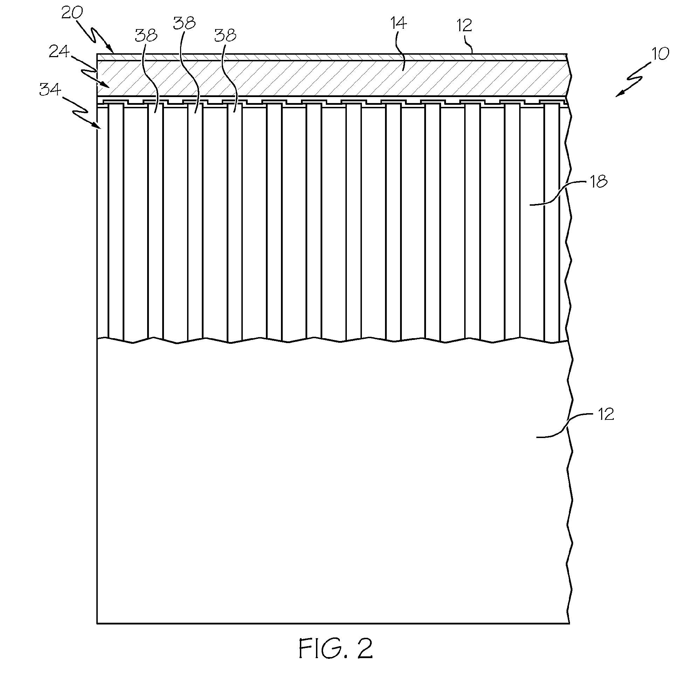

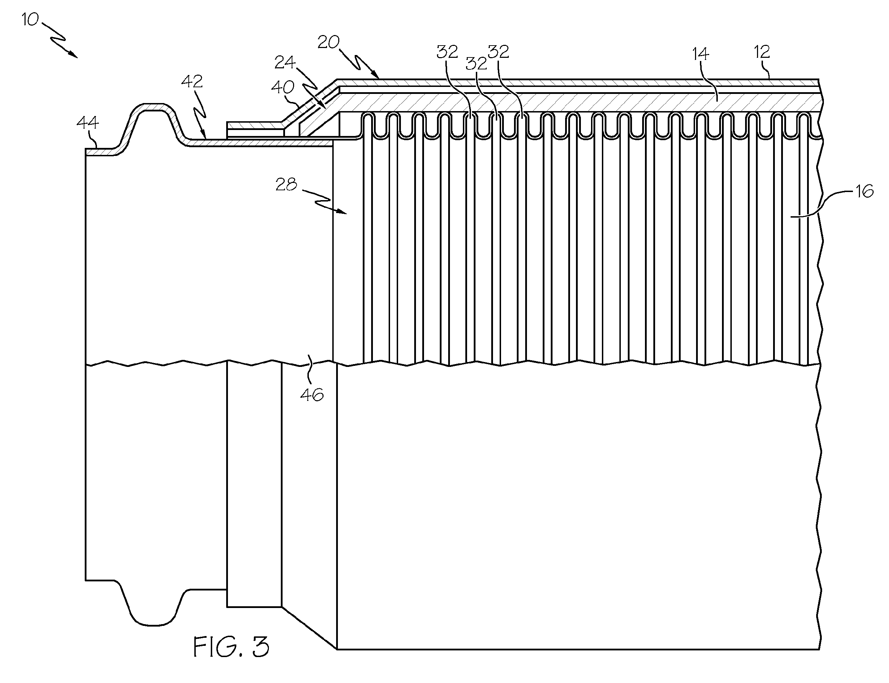

The present invention is directed generally toward an internally insulated rigid exhaust system or conduit 10. As illustrated in Figs. 1 and 2, the system 10 may include, among other components, an outer rigid pipe or other tubular member 12, an intermediate insulating layer 14 and a generally flexible inner portion, internal hose or other tubular member 16 or 18. The conduit 10 may also include other layers disposed around the outer tube 12, disposed within the inner portion 16 or 18 or located between the outer tube 12 and inner portion 16 or 18. Additionally, as shown in Figs. 3-7, the conduit 10 may include transition components 40, end fittings 42, internal expansion rings 48 or other elements provided in order to secure each of the layers of the conduit 10 together or effectuate the coupling of the conduit 10 with other components within a vehicle's exhaust system.

The outer rigid tube 12 includes first and second ends 20 and 22 and is of a generally tubular configuration. The outer tube 12 may be of any suitable length and constructed of pipe or other tubing material having a suitable diameter or other geometrical cross-section. As will be appreciated, the tube 12 can be formed of a generally rigid material including steel, stainless steel, aluminum, carbon fiber, polymer, ferrous and nonferrous materials, other metallic and alloy materials or any other suitable material presently known or hereafter developed. The wall of the outer tube 12 may be solid or may include holes, slits, slots or other apertures defined therethrough.

As demonstrated in the figures, insulation material 14 is positioned between the inner portion 16 or 18 and the outer tube 12. As discussed in further detail below, the insulation material 14 may be in the form of a sheet, blanket or sleeve having first and second ends 24 and 26 or loose particles, fibers, filaments or pieces. The insulation material 14 is constructed of any suitable material effective to resist heat transmission. Additionally, the material 14 may be suitable for suppressing noise transmission. Further, the material 14 can provide a barrier that dampens vibrations and prevents the inner portion 16 or 18 and outer tube 12 from physically contacting one another. As a consequence, the conduit 10 may exhibit reduced heat transmission, improved noise control, diminished vibrations and enhanced structural capabilities.

One material that is satisfactory for the insulation material 14 is commercially available silica or silicone fiber insulation. However, other materials having the necessary characteristics can also be used, including but not limited to fiberglass, mineral wool, macroporous materials, microporous materials and foam materials. In one embodiment, the insulation material 14 can have two components: (1) a woven fiber layer and (2) a fibrous material layer. The woven fiber layer serves to protect the inner portion 16 or 18 against wear and serves to prevent the infiltration of insulation fibers through an interlock member 18 and into the exhaust stream. The insulation material 14 may be comprised of any suitable configuration, including but not limited to (1) only a fibrous material, (2) only a woven material, (3) a fibrous material with a woven material on one side or (4) a fibrous material sandwiched between and having woven materials on both sides, among others described here or known to own of skill in the art.

As will be discussed in greater detail below, the insulation material 14 may comprise a sheet of material wrapped around the inner portion 16 or 18 to form a wrapped subassembly that is then inserted into the outer tube 12. The insulation material 14 may be covered or coated with tape, mesh, plastics, glue and/or lubricating materials. In another embodiment, the insulation may be loose insulation that is blown into a gap formed between the inner portion 16 or 18 and the outer tube 12. In either embodiment, it will be appreciated that the inner portion 16 or 18 is surrounded, either partially or wholly, with an insulation material 14. In yet another embodiment, air or a vacuum takes the place of some or all of the insulation in the conduit 10. In that embodiment, the gap or void space between the inner portion 16 or 18 and the outer tube 12 acts to insulate the conduit 10.

The inner portion may be constructed of a generally flexible member. In one embodiment, the inner portion is a spirally-wound interlock hose member 18, as depicted in Figs. 2, 4 and 7. The hose member 18, which includes first and second ends 34 and 36, can be formed from a single interlocking strip of metal that is spirally wound to form a flexible hose. The hose member 18 includes grooves or corrugations 38 formed by the interlocking strip. The interlock hose member 18 may be of a type generally known in the industry. Examples of such hoses 18 include those offered by Tru-Flex Metal Hose, LLC of West Lebanon, Indiana under the names Tru-Lite®, Power-Flex®, Poly-Flex®, TFL-SSS™ and TFA™.

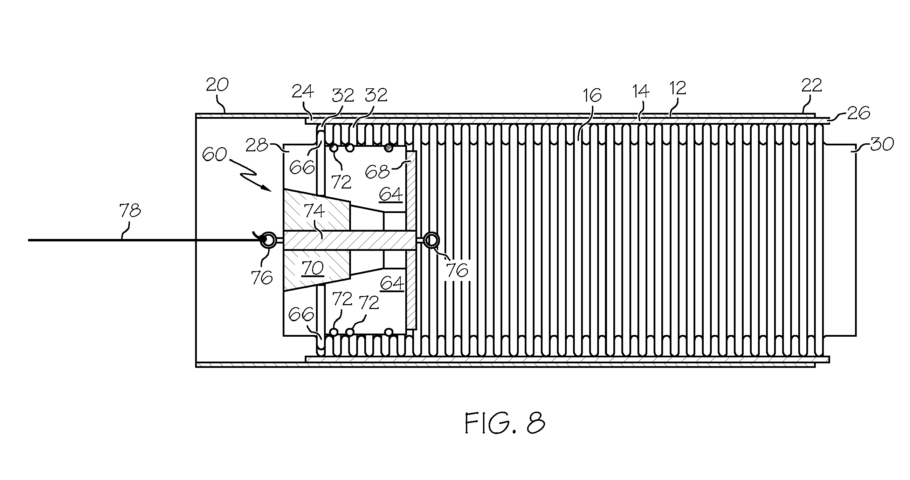

In another embodiment, the inner portion may comprise a bellows member 16, as shown in Figs. 1, 3, 5, 8 and 9. The bellows member 16, which may be formed of a metallic material and may be of a generally cylindrical or other tubular shape, is comprised of first and second ends 28 and 30 with a plurality of repeating corrugations 32 extending therebetween. In further embodiments, the inner portion may comprise other suitable flexible members, including but not limited to, a wire braid member, mesh member, chainmail member or any other suitable generally flexible tubular members. In each embodiment, the inner portion defines a bore adapted for the passage of an exhaust gas or other fluid therethrough.

In hot exhaust applications, the inner portion 16 or 18 is generally manufactured from a metallic material having a melting point temperature higher than the temperature of the exhaust gas. The inner portion 16 or 18 may be formed of a variety of materials including steel, stainless steel, aluminum, carbon fiber, polymer, ferrous and nonferrous materials, other metallic and alloy materials or any other suitable material presently known or hereafter developed.

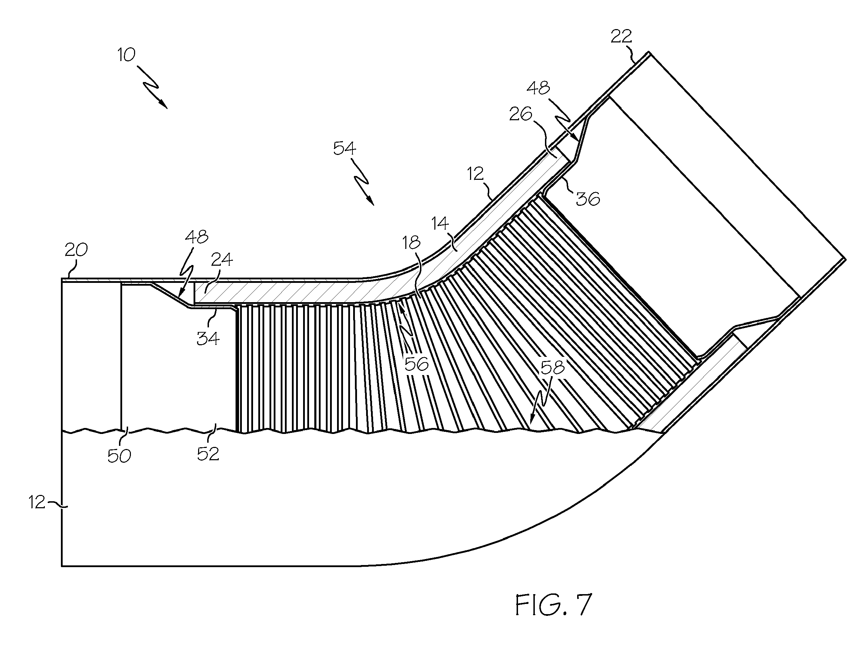

The use of a flexible inner portion 16 or 18 inside of a rigid outer tube 12 provides the conduit 10 with an internal flexibility not achievable with a rigid inner portion. As illustrated in Fig. 7, the conduit 10 can include one or more curves or bends 54. The conduit 10, including the outer rigid tube 12, may either be bent before the inner portion 16 or 18 and insulation 14 are inserted into the outer tube 12 or after the inner portion 16 or 18 and insulation 14 are inserted into the outer tube 12.

Because the inner portion is flexible, it will generally conform to the bend 54 of the outer tube 12. If the inner portion were not a flexible member (i.e., if it were a rigid member), it would not conform to the bend 54 of the outer rigid tube 12 and the gap between the inner portion and the outer tube 12 would not be of a generally consistent width. Rather, there would be a section where no gap exists at all and the inner portion and outer tube 12 would be touching one another.

As demonstrated by Fig. 7, the bend 54 includes an internally convex side 56 and an internally concave side 58 (which is covered in most part by the outer tube 12 in the figure). The corrugations 32 or 38 of the inner portion 16 or 18 are more closely spaced together near the internally convex side 56 and are more widely spread apart near the internally concave side 58, as compared to the corrugations' 32 or 38 original spacing. It is this type of flexibility that enables the inner portion 16 or 18 to generally conform to the bend 54 in the outer tube 12. The insulation material 14 can be designed to aid in maintaining the gap between the inner portion and the outer tube 12.

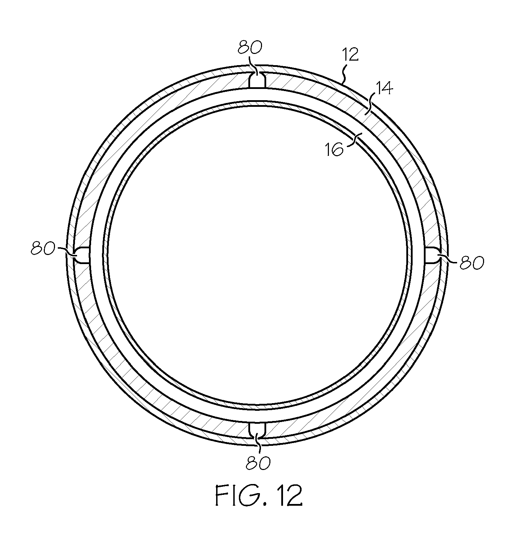

In the embodiment that comprises loose fiber material 14, spacers 80 may be used to maintain the uniformity of the annular gap between the inner portion 16 or 18 and the outer tube 12, as depicted in Fig. 12. The spacers 80 have a radial thickness. The spacers 80 may be of any size, shape, configuration and material suitable for maintaining the gap. Upon the installation of the insulation material 14 within the gap, the spacers 80 may either remain in the gap or be extracted. In one embodiment, the spacers 80 are welded or otherwise affixed to the outer surface of the inner portion 16 or 18 prior to the insertion of the inner portion 16 or 18 into the outer tube 12. In addition to maintaining the gap between the inner portion 16 or 18 and outer tube 12 during the installation of the insulation material 14, the spacers 80 may also be adapted for maintaining that gap during and after the formation of one or more bends 54.

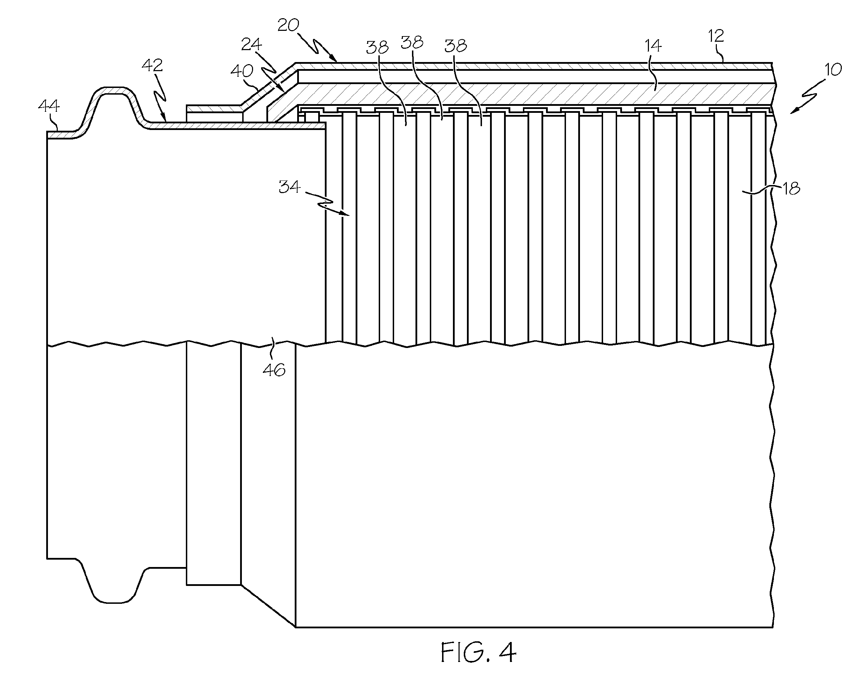

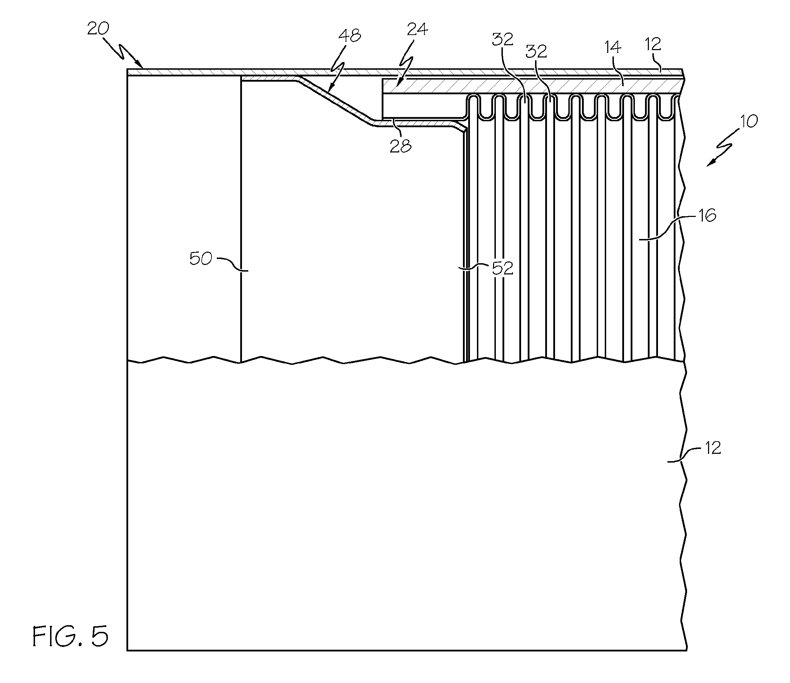

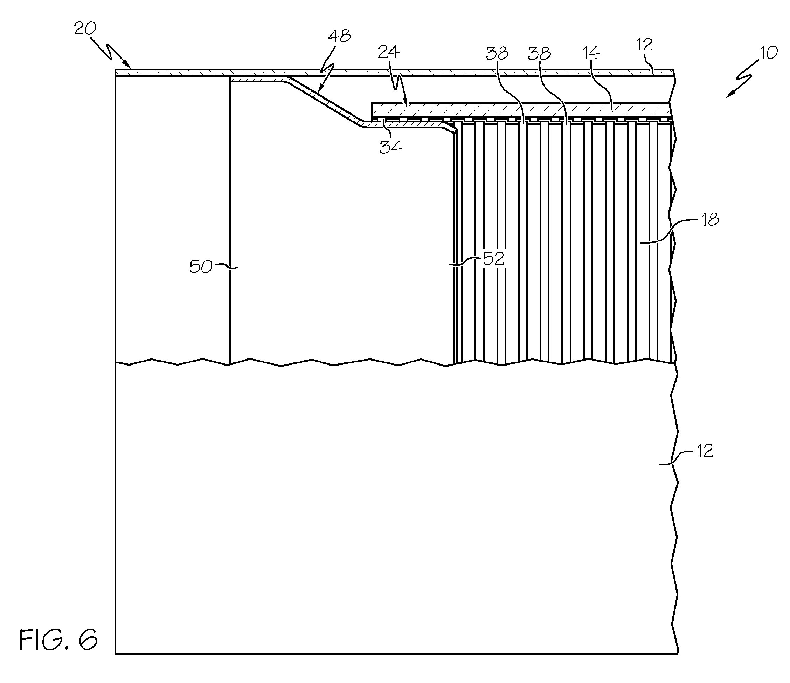

As depicted in Figs. 3 and 4, the conduit 10 may optionally include an end fitting 42 having first and second ends 44 and 46 and a transition component 40. The second end 46 of the fitting 42 can be inserted into a first end 28 of the inner portion 16 or 18. The first end 44 of the fitting 42 may be adapted for connection to an adjacent component in a vehicle's exhaust system. The transition component 40 is adapted for being welded or otherwise attached to both the outer tube 12 and the end fitting 42. In another embodiment, as illustrated in Figs. 5 and 6, the conduit includes an internal expansion ring 48 having first and second ends 50 and 52 adapted for securing an end of the inner portion 16 or 18 to an interior surface of the outer tube 12.

Turning now to the methods for manufacturing the conduit 10, it will be understood that the conduit 10 may be manufactured using more than one method. In one embodiment, the inner portion 16 or 18 is wrapped with an insulation material 14 to form a wrapped subassembly. The insulation material 14 may be in the form of a sheet, blanket or sleeve. The wrapped subassembly comprises the inner portion 16 or 18 and the insulation material 14. The wrapped subassembly is sleeved or inserted into the outer tube 14. The insertion of the wrapped subassembly may occur either prior to or after the outer tube 12 has been bent.

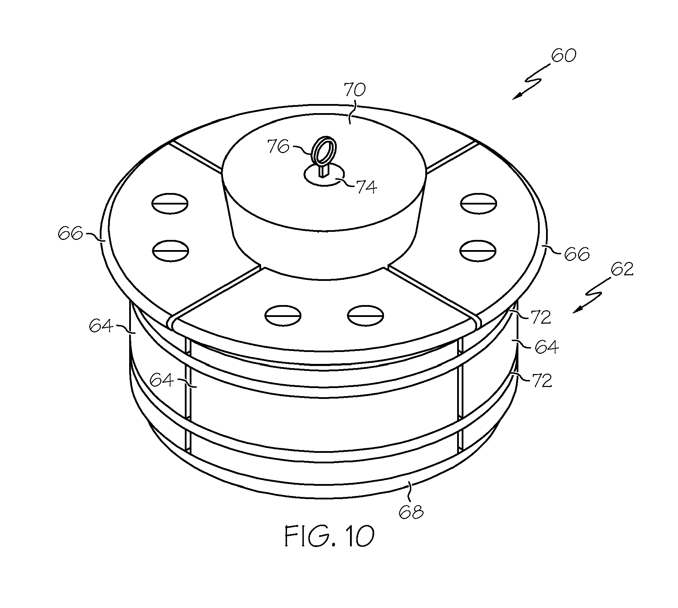

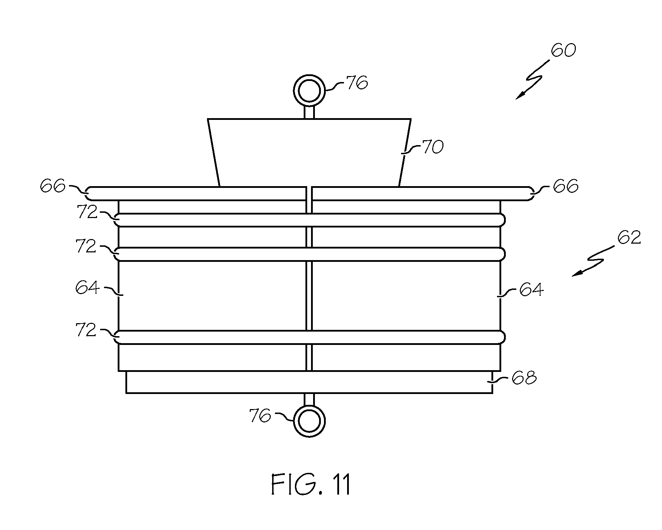

In order to facilitate the insertion of the wrapped subassembly into the outer tube 12, a sleeving fixture 60, as shown in Figs. 10 and 11, may be utilized. The sleeving fixture 60 is adapted for engaging the inner portion 16 or 18 to assist in the pulling or pushing of the wrapped subassembly. As shown, the sleeving fixture includes a base 62 comprising two or more sections 64. The sections 64 are expandable and contractible and include a shoulder or lip 66 extending radially outwardly therefrom. The fixture 60 further includes an end plate 68 and a tapered insert 70 attached thereto with a threaded pin 74. After the fixture 60 is inserted into the inner portion 16 or 18, the threaded pin 74 is turned in order to advance the tapered insert 70 towards the end plate 68. As the tapered insert 70 advances towards the end plate 68, it wedges sections 64 apart thereby causing lips 66 to move outwardly. As they advance outwardly, the lips 66 engage one or more of the corrugations 32 and 38 of the inner portion 16 and 18.

Once the fixture 60 has engaged the inner portion 16 or 18, the wrapped subassembly may be pulled into the outer tube 12. While the wrapped subassembly may alternatively be pushed into the outer tube 12, the pulling action will generally result in a slight linear expansion of the inner portion 16 or 18 and therefore, a shrinking in diameter, as opposed to expanding in diameter, as the wrapped subassembly is being inserted into the outer tube 12. The threaded pin 74 may be equipped with eyelets 76 that are employed for attaching a cable, chain, rope or other suitable line to the fixture 60 for pulling.

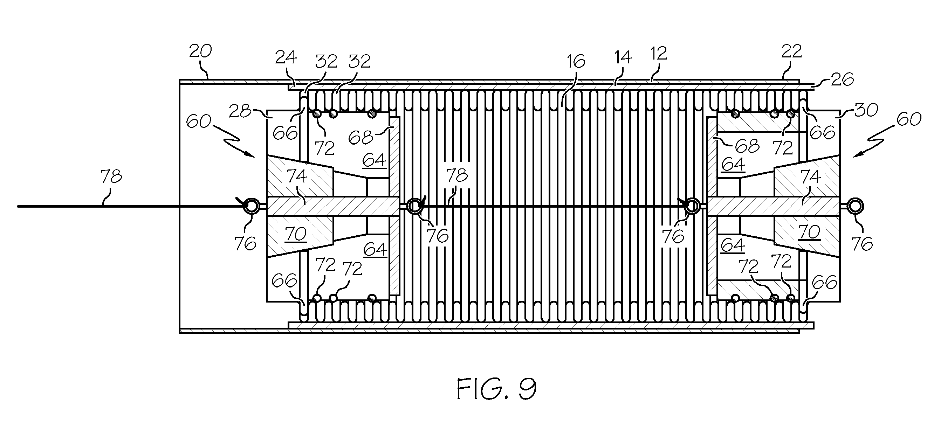

Once the wrapped subassembly is fully inserted into the outer tube 12, the threaded pin 74 is turned in a reverse direction so as to back the tapered insert 70 out from within the fixture 60. In doing so, bands or o-rings 72 contract the sections 64 back into a retracted position. As the lips 66 disengage the corrugations 32 or 38, the fixture 60 may be removed from the inner portion 16 or 18. The bands or o-rings 72 maintain the sections 64 of the fixture 60 in a retained relationship. Further, as demonstrated in Fig. 9, two or more fixtures 60 may be linked together in series in order to pull the wrapped subassembly into the outer tube 12. It will be appreciated that, due to the flexibility of the inner portion and the insulation material 14, the wrapped subassembly may be inserted into the outer tube 12 even after the outer tube 12 has been bent. Upon the insertion of the wrapped subassembly into the outer tube 12, the ends of the wrapped subassembly and/or outer tube 12 may be cut to a desired length. Transition components 40, end fittings 42 and/or internal expansion rings 48 can then be welded to the conduit 10.

In another embodiment, the insulation material 14 is placed, injected, blown, stuffed, sprayed or otherwise placed into an annular gap defined between the inner portion and the outer tube 12. In this method, the inner portion is inserted into the outer tube 12 without any insulation 14 wrapped therearound. Once the inner portion is placed within the outer tube 12, the insulation 14 may be blown into the gap defined between the inner portion and outer tube 12. Optionally, a temporary cap may be placed on the end of the conduit 10 opposite the insulation insertion point to allow the insulation 14 to build up and completely compress inside of the gap. The insulation blower tube (not shown) is designed to have a circular slot no greater in size than the gap defined between the inner portion and outer tube 12. The insulation may be injected, blown, sprayed or stuffed into the gap either before or after the outer tube 12 has undergone bending.

As an additional step, spacers 80 may be placed between the outer surface of the inner portion and the inner surface of the outer tube 12 in order to maintain a generally uniform gap between the inner portion and outer tube 12. The spacers 80 may be welded or otherwise attached to the outer surface of the inner portion.

Optionally, the assembled conduit 10 (which includes an outer rigid tube 12, insulation 14 and a flexible inner portion 16 or 18) may be bent to a desired angle in a bending process. The advantage of the present invention is that during the bending process the flexible inner portion 16 and 18 and the insulation 14 will conform to the bend(s) that the rigid out tube 12 is experiencing. The bending process may be undertaken using a pipe bender, such as a CNC pipe bender, using a press or using any other suitable bending process. The final product is an internally insulated rigid exhaust piping system which can be bent as a user or customer requires.

Finally, the conduit 10 of the present invention will not involve or require the amount of space needed to externally insulate an exhaust system with a blanket wrap. The conduit 10 can be of any desired length, for example, less than one foot, more than 200 feet or anywhere therebetween. The conduit 10 may also be any desired diameter, for example, less than one inch, more than 24 inches or anywhere therebetween. The exhaust piping system of the present invention may also be suitable for operating in a wide variety of temperature ranges, for example, less than - 200° F, more than 2500° F or anywhere therebetween.

From the foregoing, it will be seen that this invention is one well adapted to attain all the ends and objects hereinabove set forth together with other advantages which are obvious and which are inherent to the structure. It will be understood that certain features and sub combinations are of utility and may be employed without reference to other features and sub combinations. This is contemplated by and is within the scope of the claims. Since many possible embodiments of the invention may be made without departing from the scope thereof, it is also to be understood that all matters herein set forth or shown in the accompanying drawings are to be interpreted as illustrative and not limiting.

The constructions described above and illustrated in the drawings are presented by way of example only and are not intended to limit the concepts and principles of the present invention. Thus, there has been shown and described several embodiments of a novel invention. As is evident from the foregoing description, certain aspects of the present invention are not limited by the particular details of the examples illustrated herein, and it is therefore contemplated that other modifications and applications, or equivalents thereof, will occur to those skilled in the art. The terms "having" and "including" and similar terms as used in the foregoing specification are used in the sense of "optional" or "may include" and not as "required". Many changes, modifications, variations and other uses and applications of the present construction will, however, become apparent to those skilled in the art after considering the specification and the accompanying drawings. All such changes, modifications, variations and other uses and applications which do not depart from the spirit and scope of the invention are deemed to be covered by the invention which is limited only by the claims which follow.

## Claims

1. An internally insulated rigid conduit for use in an exhaust system, said conduit comprising:
an outer rigid tube;
a generally flexible inner portion positioned within said outer tube and arranged to provide a bore through said conduit for the passage of fluid therethrough; and
an insulation layer positioned between said inner portion and said outer tube, said insulation layer being constructed to suppress heat transmission from within said conduit.

2. The conduit as set forth in claim 1, wherein said inner portion comprises a spirally-wound interlock hose member, a bellows member having a tubular and repeatedly corrugated shape, or a braid member.

3. The conduit as set forth in any one of the preceding claims, wherein said insulation layer comprises a sheet of insulating material wrapped around said inner portion.

4. The conduit as set forth in any one of the preceding claims, wherein said insulation layer comprises loose particles of insulation placed between said inner portion and said outer tube.

5. The conduit of claim 4 further comprising one or more spacers having a radial thickness, said spacers being positioned between said inner portion and said outer tube for maintaining a generally uniform annular gap therebetween.

6. The conduit of claim 5, wherein said spacers are affixed to an outer surface of said inner portion.

7. The conduit as set forth in any one of the preceding claims, wherein said outer tube includes a bend.

8. The conduit as set forth in claim 7, wherein said inner portion and said insulation layer generally conform to said bend of said outer tube.

9. The conduit as set forth in claim 8, wherein said inner portion includes corrugations and said corrugations are more widely spaced apart at an internally concave side of said bend and are more closely spaced together at an internally convex side of said bend as compared to the corrugations' original spacing.

10. A method of manufacturing an internally insulated rigid conduit structure for use in an exhaust system, said method comprising the steps of:
providing an outer rigid tube;
providing a generally flexible inner portion;
providing insulation material;
wrapping said insulation material around said inner portion to form a wrapped subassembly; and
inserting said wrapped subassembly into said outer tube.

11. The method of claim 10, further comprising the steps of:
providing a sleeving fixture suitable for engaging said inner portion of said wrapped subassembly;
engaging said inner portion with said sleeving fixture; and
pulling said sleeving fixture in order to pull said wrapped subassembly through said outer tube.

12. The method of claim 11, wherein said sleeving fixture comprises a lip for engaging a corrugation of said inner portion.

13. The method of claim 11 or 12, wherein said sleeving fixture further comprises:
at least two sections configured to be spread apart as a tapered insert is wedged therebetween;
a lip extending from each of said at least two sections; and
a band adapted for maintaining said sections in retained relationship.

14. The method of any one of claims 10 to 13, further comprising the step bending said outer tube prior to inserting said wrapped subassembly.

15. The method of any one of claims 10 to 10, further comprising the step bending said outer tube after inserting said wrapped subassembly.

16. A method of manufacturing an internally insulated rigid conduit structure for use in an exhaust system, said method comprising the steps of:
providing an outer rigid tube;
providing a generally flexible inner portion;
inserting said inner portion into said outer tube such as to define an annular gap therebetween;
providing insulation material;
placing said insulation material in said gap between said inner portion and outer tube.

17. The method of claim 16, wherein said insulation material is blown into said gap between said inner portion and outer tube.

18. The method of claim 16 or 17 further comprising the steps of providing at least one spacer and placing said at least one spacer between an outer surface of said inner portion and an inner surface of said outer tube such as to maintain a generally uniform annular gap between said inner portion and said outer tube.

19. The method of claim 18 further comprising the step of attaching said at least one spacer to said outer surface of said inner portion.
